# EUROPEAN PATENT APPLICATION

(11) **EP 4 465 408 A1**
(43) Date of publication of application: **20.11.2024**
(21) Application number: 23762679.1
(22) Date of filing: 13.01.2023
(51) Int. Cl.: H01M 10/0587, H01M 10/0525

(54) **CELL FORMING APPARATUS, CELL FORMING PROCESS, AND CELL**

(30) Priority: 01.03.2022 CN 202210195515
(71) Applicant: Wuxi Lead Intelligent Equipment Co., Ltd., Wuxi, Jiangsu 214028 (CN)
(72) Inventor: ZHAO, Liujie, Wuxi, Jiangsu 214028 (CN); WANG, Fengjie, Wuxi, Jiangsu 214028 (CN)
(74) Representative: Rau, Schneck & Hübner Patentanwälte Rechtsanwälte PartGmbB
(86) International application number: PCT/CN2023/072042
(87) International publication number: WO 2023/165278

(57) **Abstract**

The present disclosure relates to a cell forming apparatus (200) and a cell forming process. Before an anode pole piece (120) and a cathode pole piece (110) enter a winding device (260), firstly a compounding device (240) compounds the anode pole piece (120) and the cathode pole piece (110) with a first diaphragm (131) in a three-in-one compound to obtain a first compound material strip (300). Since the anode pole piece (120) and the cathode pole piece (110) are respectively located on two sides of the first diaphragm (131), the first diaphragm (131) will be enveloped between the anode pole piece (120) and the cathode pole piece (110). During the compounding process, the surfaces on both sides of the first diaphragm (131) will not come into direct contact with the compounding device (240). Therefore, it is possible to prevent the adhesive on the surface of the first diaphragm (131) from adhering to the compounding device (240), thereby improving the compounding effect of the first diaphragm (131) with the anode pole piece (120) and the cathode pole piece (110), and thus enhancing the quality of the manufactured cell (100). In addition, the present disclosure also provides a cell (100). (FIG. 1)

## Description

### TECHNICAL FIELD

The present disclosure relates to the technical field of lithium batteries, and in particular to a cell forming apparatus, a cell forming process and a cell.

### BACKGROUND

As a rechargeable secondary battery, the lithium battery has advantages such as small size, high energy density, high number of reusability cycles and high stability, and has been widely used in automotive power batteries. A cell of the lithium battery comprises a cathode pole piece, an anode pole piece, and a diaphragm separating the cathode pole piece from the anode pole piece.

At present, most battery manufacturers use a winding process to manufacture the cell. In order to ensure that each diaphragm layer in the manufactured cell has higher degree of alignment, generally, a cathode pole piece and an anode pole piece are compounded with two diaphragm material strips respectively to obtain two compound material strips, and then the two compound material strips are fed into the winding device to form the cell.

However, when a cathode pole piece and an anode pole piece adjacent thereto are respectively compounded with the diaphragm material strip, it is found that the compounding effect between the diaphragm and the pole piece is poor, which leads to the poor quality of the cell obtained by winding.

### SUMMARY

In view of the above, it is necessary to provide a cell forming apparatus and a cell forming process capable of improving the quality of the manufactured cell.

A cell forming apparatus comprises a first diaphragm-unwinding device, a cathode-unwinding device, an anode-unwinding device, a compounding device, a second diaphragm-unwinding device and a winding device; the first diaphragm-unwinding device is configured for unwinding a first diaphragm, and the cathode-unwinding device and the anode-unwinding device are capable of unwinding a cathode pole piece and an anode pole piece respectively on two sides of the first diaphragm; the compounding device is capable of receiving the first diaphragm, the cathode pole piece and the anode pole piece and compounding them to obtain a first compound material strip; the second diaphragm-unwinding device is configured for unwinding a second diaphragm; the winding device comprises a winding needle structure capable of winding the first compound material strip and the second diaphragm into a cell.

In one of embodiments, the compounding device comprises an upper pressure roller and a lower pressure roller, and wherein the cathode pole piece, the anode pole piece, and the first diaphragm are capable of passing between the upper pressure roller and the lower pressure roller.

In one of embodiments, both the upper pressure roller and the lower pressure roller are heat pressure rollers.

In one of embodiments, the cell is capable of being pressed into a flat structure with a straight area and a bent area, the cell forming apparatus further comprises a pole piece processing apparatus, which is capable of processing the cathode pole piece to form a broken portion on the cathode pole piece of the first compound material strip, and the broken portion is located in the bent area of the manufactured cell.

In one of embodiments, the pole piece processing apparatus comprises a holding-transporting mechanism and a cutting mechanism, which are both provided between the cathode-unwinding device and the compounding device, the holding-transporting mechanism is capable of clamping and transporting the cathode pole piece, the cutting mechanism is capable of cutting off the cathode pole piece between the holding-transporting mechanism and the compounding device, and the holding-transporting mechanism is capable of pulling apart at a cut-off position to form the broken portion.

In one of embodiments, the pole piece processing apparatus further comprises a tape-bonding mechanism, which is capable of bonding a first tape on a side of the cathode pole piece so as to bond, to the first diaphragm, the cathode pole piece at a side of the broken portion proximate to the holding-transporting mechanism.

In one of embodiments, the tape-bonding mechanism is further capable of bonding a second tape on a side of the cathode pole piece so as to bond, to the first diaphragm, the cathode pole piece at a side of the broken portion distal to the holding-transporting mechanism.

In one of embodiments, the tape-bonding mechanism is provided between the cutting mechanism and the compounding device.

In one of embodiments, the pole piece processing apparatus comprises:
at least two holding-transporting mechanisms, each of which is capable of holding and transporting the cathode pole piece;
a cutting mechanism provided between two adjacent holding-transporting mechanisms, each cutting mechanism being capable of cutting off the cathode pole piece so as to obtain at least two pole piece subsections, and the at least two holding-transporting mechanisms being capable of holding the at least two pole piece subsections respectively and pulling the two adjacent pole piece subsections apart to form the broken portion;
a tape-bonding mechanism, which is capable of bonding a connector on at least one side of the cathode pole piece, to cover the broken portion so as to integrally connect the at least two pole piece subsections.

In one of embodiments, the winding device further comprises a turret where a plurality of winding needle structures are provided, and the turret rotates to drive the plurality of winding needle structures to sequentially transfer to a position capable of obtaining the first compound material strip and the second diaphragm.

A cell forming process comprises steps of:
providing a first diaphragm, a second diaphragm, a cathode pole piece and an anode pole piece;
compounding the first diaphragm, the cathode pole piece and the anode pole piece to obtain a first compound material strip, the cathode pole piece and the anode pole piece in the first compound material strip being attached respectively to two sides of the first diaphragm;
winding the first compound material strip and the second diaphragm into a cell, and pressing the cell into a flat structure with a straight area and a bent area.

In one of embodiments, further comprising a step of: processing the cathode pole piece to form a broken portion on the cathode pole piece of the first compound material strip, the broken portion being located in the bent area.

Regarding the above cell forming apparatus and process, before the anode pole piece and cathode pole piece enter the winding device, firstly the compounding device compounds the anode pole piece and the cathode pole piece with the first diaphragm in a three-in-one compound to obtain the first compound material strip. Since the anode pole piece and the cathode pole piece are respectively located on two sides of the first diaphragm, the first diaphragm will be enveloped between the anode pole piece and the cathode pole piece. During the compounding process, the surfaces on both sides of the first diaphragm will not come into direct contact with the compounding device. Therefore, it is possible to prevent the adhesive on the surface of the first diaphragm from adhering to the compounding device, thereby improving the compounding effect of the first diaphragm with the anode pole piece and the cathode pole piece, and thus enhancing the quality of the manufactured cell.

In addition, the present disclosure further provides a cell, which is manufactured by the cell forming apparatus according to any one of the above preferred embodiments; or, the cell is manufactured by the cell forming process according to any one of the above preferred embodiments, the cell comprises a cathode pole piece, an anode pole piece, and a diaphragm located between a cathode pole piece and an anode pole piece adjacent thereto, wherein the cathode pole piece, the anode pole piece and the diaphragm are wound and pressed to form a flat structure, and the cell has a straight area and bent areas located at both ends of the straight area.

In one of the embodiments, the cathode pole piece, at least partially located in the bent area, forms a broken portion extending in a width direction.

In one of the embodiments, the broken portion divides the cathode pole piece where the broken portion is located into at least two pole piece subsections, and the at least two pole piece subsections are integrally connected through a connector.

### BRIEF DESCRIPTION OF THE DRAWINGS

In order to more clearly illustrate embodiments of the present application or technical solutions in the prior art, accompanying drawings that need to be used in description of the embodiments or the prior art will be briefly introduced as follows. Obviously, drawings in following description are only the embodiments of the present application. For those skilled in the art, other drawings can also be obtained according to the disclosed drawings without creative efforts.
FIG. 1 is a schematic structural illustration of a cell forming apparatus in a preferred embodiment of the present disclosure;
FIG. 2 is a sectional view of the cell in a direction perpendicular to a winding axis in a preferred embodiment of the present disclosure;
FIG. 3 is a partial top view of a first compound material strip involved in the present disclosure;
FIG. 4 is a schematic structural illustration of the cell forming apparatus in another embodiment of the present disclosure;
FIG. 5 is a schematic structural illustration of a pole piece processing apparatus in the cell forming apparatus shown in FIG. 4;
FIG. 6 is a partial top view of a cathode pole piece after processed by the pole piece processing apparatus shown in FIG. 5;
FIG. 7 is a flow diagram of a cell forming process in a preferred embodiment of the present disclosure.

### DETAILED DESCRIPTION

In order to make the above objects, features and advantages of the present disclosure more prominent and easily understood, specific embodiments of the present disclosure will be described in detail below with reference to the accompanying drawings. In a following description, numerous specific details are set forth in order to provide a thorough understanding of the present disclosure. However, the present disclosure may be implemented in many other ways different from those described here, and those skilled in the art can make similar improvements without violating a connotation of the present disclosure. Therefore, the present disclosure is not limited by the specific embodiments disclosed below.

In the description of the present disclosure, it should be understood that, an orientation or positional relationship indicated by terms "center", "longitudinal", "lateral", "length", "width", "thickness", "upper", "lower", "front", "back", "left", "right", "vertical", "horizontal", "top", "bottom", inner", "outer", "clockwise", "counterclockwise", "axial", "radial", "circumferential" is based on the orientation or positional relationship shown in the accompanying drawings, and is only for convenience of describing the present disclosure and simplifying the description, rather than indicating or implying that a device or element referred to must be provided with a particular orientation, be constructed and operate in a particular orientation, and therefore should not be understood as a limitation to the present disclosure.

In addition, terms "first" and "second" are only used for descriptive purposes and should not be understood as indicating or implying relative importance or implying a number of indicated technical features. Therefore, a feature delimited with "first", "second" may expressly or implicitly comprise at least one of those features. In a description of the present disclosure, "a plurality" means at least two, such as two, three, etc., unless expressly and specifically defined otherwise.

In the present disclosure, unless expressly specified and limited otherwise, terms "installed", "communicated", "connected", "fixed" and other terms should be interpreted in a broad sense, for example, it may be a fixed connection, a detachable connection, or an integrated; it may be a mechanical connection or an electrical connection; it may be directly connected, or indirectly connected through an intermediate medium, and it may be an internal communication between two elements or an interaction relationship between the two elements, unless otherwise explicitly defined. For those of ordinary skill in the art, specific meanings of the above terms in the present disclosure may be understood according to specific situations.

In the present disclosure, unless expressly stated and defined otherwise, a first feature "on" or "under" a second feature may be that the first feature is in direct contact with the second feature, or the first feature and the second feature are indirectly contacted through an intermediary. In addition, the first feature being "above", "over" and "on" the second feature may mean that the first feature is directly above or obliquely above the second feature, or simply means that the first feature is higher than the second feature in a horizontal direction. The first feature being "below", "under" and "below" the second feature may mean that the first feature is directly below or obliquely below the second feature, or simply means that the first feature is smaller than the second feature in a horizontal direction.

It should be noted that when an element is referred to as being "fixed to" or "arranged on" another element, it may be directly on another element, or there may be an intervening element therebetween. When an element is referred to as being "connected" to another element, it may be directly connected to another element or intervening elements may also be present. Terms "vertical", "horizontal", "upper", "lower", "left", "right" and similar expressions used here are only for illustration purposes rather than indicating the only implementation.

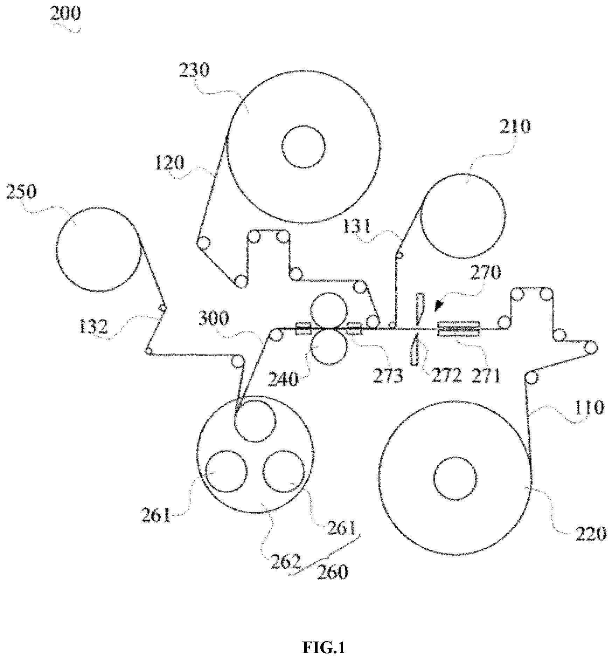

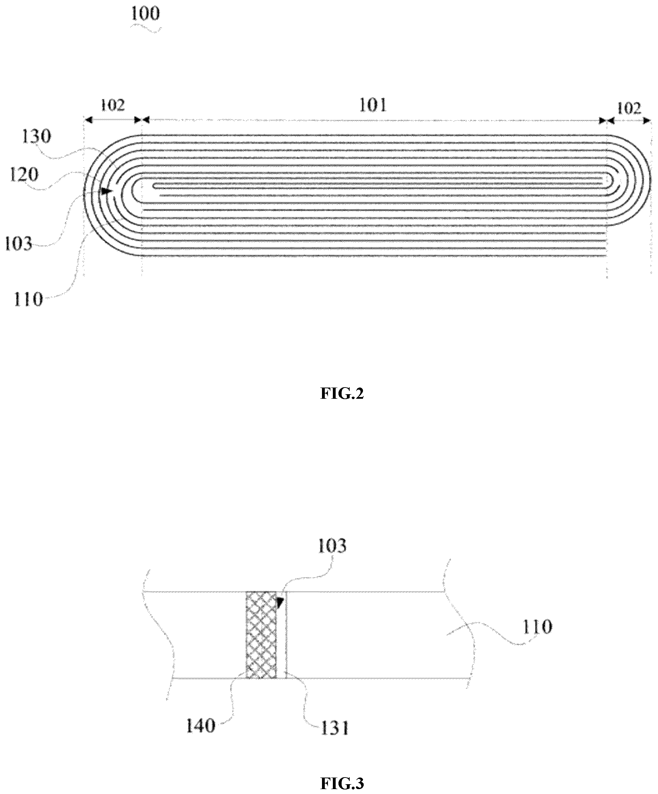

Referring to FIGS. 1 and 2, the present disclosure provides a cell 100 and a cell forming apparatus 200, wherein the cell 100 may be manufactured by the cell forming apparatus 200. The cell 100 comprises a cathode pole piece 110, an anode pole piece 120, and a diaphragm 130, and the diaphragm 130 is located between the adjacent cathode pole piece 110 and anode pole piece 120 and is used for separating them to prevent short-circuiting. The cathode pole piece 110, the anode pole piece 120, and the diaphragm 130 are stacked and then wound and pressed to form a flat structure.

Further, the cell 100 has a straight area 101 and bent areas 102 at both ends of the straight area 101. The straight area 101 refers to an area with a parallel structure in the cell 100 with the flat structure, that is, the cathode pole piece 110, the anode pole piece 120, and the diaphragm 130 in the straight area 101 are essentially parallel to each other, and the surfaces of each layer of the cathode pole piece 110, anode pole piece 120, and diaphragm 130 in the straight area 101 are substantially flat surfaces. The bent area 102 refers to an area with a bent structure in the cell 100 with the flat structure, that is, the cathode pole piece 110, the anode pole piece 120, and the diaphragm 130 in the bent area 102 are all bent, and the surfaces of each layer of the cathode pole piece 110, the anode pole piece 120, and the diaphragm 130 are curved surfaces.

Referring again to FIG. 1, in a preferred embodiment of the present disclosure, the cell forming apparatus 200 comprises a first diaphragm-unwinding device 210, a cathode-unwinding device 220, an anode-unwinding device 230, a compounding device 240, a second diaphragm-unwinding device 250, and a winding device 260.

The first diaphragm-unwinding device 210 is used for unwinding the first diaphragm 131. To facilitate subsequent compounding operations, the surface of the first diaphragm 131 is pre-coated with glue or other adhesives. The second diaphragm-unwinding device 250 is used for unwinding the second diaphragm 132. Wherein, the first diaphragm 131 and the second diaphragm 132 both refer to the diaphragm 130 in the cell 100. To distinguish them, the diaphragms unwound by the first diaphragm-unwinding device 210 and those unwound by the second diaphragm-unwinding device 250 are respectively referred to as the first diaphragm 131 and the second diaphragm 132, respectively. Both the first diaphragm 131 and the second diaphragm 132 are insulating films that serve to prevent short-circuiting. The first diaphragm-unwinding device 210 and the second diaphragm-unwinding device 250 are generally identical in construction and may take the form of an unwinding shaft.

The cathode-unwinding device 220 and the anode-unwinding device 230 are capable of unwinding the cathode pole piece 110 and the anode pole piece 120 respectively on two sides of the first diaphragm 131. Both the cathode-unwinding device 220 and the anode-unwinding device 230 may take the form of an unwinding shaft, and the cathode pole piece 110 and the anode pole piece 120 may be wound on the cathode-unwinding device 220 and the anode-unwinding device 230 in the form of material strips for continuous unwinding.

After unwinding, the first diaphragm 131 is sandwiched between the cathode pole piece 110 and the anode pole piece 120. Specifically, the cathode pole piece 110 is located beneath the first diaphragm 131, while the anode pole piece 120 is located above the first diaphragm 131. Obviously, the positions of the cathode pole piece 110 and the anode pole piece 120 may be interchanged.

The compounding device 240 may receive the first diaphragm 131, the cathode pole piece 110 and the anode pole piece 120, and compound them to obtain the first compound material strip 300. The first compound material strip 300 comprises the first diaphragm 131 as well as the cathode pole piece 110 and the anode pole piece 120 attached on a respective one of two sides of the first diaphragm 131 respectively. Specifically, in the present embodiment, the compounding device 240 comprises an upper pressure roller (not labeled in the figure) and a lower pressure roller (not labeled in the figure), between which the cathode pole piece 110, anode pole piece 120, and the first diaphragm 131 may pass.

The upper pressure roller and the lower pressure roller are both rotatable on their respective own axes, and one of them is connected to a driving assembly for active rotation. When the first diaphragm 131, the cathode pole piece 110, and the anode pole piece 120 pass between the upper pressure roller and the lower pressure roller, the upper pressure roller and the lower pressure roller cooperate to clamp the first diaphragm 131, the cathode pole piece 110, and the anode pole piece 120. Moreover, as the upper pressure roller and the lower pressure roller rotate, the first diaphragm 131, the cathode pole piece 110, and the anode pole piece 120 are compounded to obtain the first compound material strip 300, and the obtained first compound material strip 300 may be transported downstream under driving of the compounding device 240.

Wherein, the upper pressure roller and the lower pressure roller may both be heating pressure rollers to form the first compound material strip 300 by hot pressing. Obviously, in other embodiments, the first compound material strip 300 may also be formed by cold pressing.

During the compounding process, since the anode pole piece 120 and the cathode pole piece 110 are respectively located on two sides of the first diaphragm 131 respectively, the surfaces on both sides of the first diaphragm 131 will not come into direct contact with the compounding device 240. This avoids the adhesive on the surface of the first diaphragm 131 from adhering to the compounding device 240, thereby improving the compounding effect of the first diaphragm 131 with the anode pole piece 120 and the cathode pole piece 110.

The winding device 260 comprises a winding needle structure 261. Wherein, the winding needle structure 261 may wind the first compound material strip 300 and the second diaphragm 132 into the cell 100. The wound cell 100 is roughly cylindrical or oval in shape and may be pressed into the flat structure, which flat structure comprises the straight area 101 and the bent area 102.

In the present embodiment, the winding device 260 further comprises a turret 262 where a plurality of winding needle structures 261 are provided, and the turret 262 rotates to drive the plurality of winding needle structures 261 to sequentially transfer to a position capable of obtaining the first compound material strip 300 and the second diaphragm 132.

The turret 262 may be connected to a driving mechanism such as a motor and may rotate by a certain angle under the drive of the driving mechanism. After the previous cell 100 is wound, the turret 262 rotates and brings the next winding needle structure 261 to the winding station (i.e., a position where the first compound material strip 300 and the second diaphragm 132 may be obtained). Then, the next winding needle structure 261 extends out and obtains the first compound material strip 300 and the second diaphragm 132. Once the previous cell 100 is cut off at the end of the material strip, the next winding needle structure 261 may start winding for the manufacturing of the next cell 100. In this way, the plurality of winding needle structures 261 may alternately enter the winding station and wind the cell, thereby accelerating the production pace to reduce waiting time, and thus improving production efficiency.

The cathode pole piece 110 is coated with a positive electrode active substance layer formed from lithium manganate, lithium cobaltate, lithium iron phosphate, etc., while the anode pole piece 120 is coated with a negative electrode active substance layer formed from graphite, silicon, etc. The applicant has found that the cathode pole piece 110 and the anode pole piece 120 located in the bent area 102 are prone to dislodge their respective active substances during bending, referred to as "powdering off'. Especially the dislodgment of the negative electrode active substance on the anode pole piece 120 may cause that the lithium intercalation sites of the negative electrode active substance layer of the anode pole piece 120 are less than the number of lithium ions that can be provided by the positive electrode active substance layer of the cathode pole piece 110 adjacent thereto, and thus that the lithium ions de-intercalated from the positive electrode active substance layer will not be able to be intercalated in equal amounts in the negative electrode active substance layer. As a result, lithium precipitation tends to occur in the bent area 102 of the cell 100 during charging of the battery.

Correspondingly, since the cathode pole piece 110 and the anode pole piece 120 in the straight area 101 do not need to be bent in the forming process of the cell 100 and hardly experience "powdering off', the lithium intercalation sites in the negative electrode active substance layer of the anode pole piece 120 in the straight area 101 may be well-matched with the number of lithium ions that can be provided by the positive electrode active substance layer of the cathode pole piece 110 adjacent thereto. Therefore, the straight area 101 of the cell 100 is generally free from the lithium precipitation phenomenon.

To solve the problem of lithium precipitation, please also refer to FIG. 3, in the present embodiment, the cell forming apparatus 200 further comprises a pole piece processing apparatus 270, which is capable of processing the cathode pole piece 110 to form a broken portion 103 on the cathode pole piece 110 of the first compound material strip 300. The broken portion 103 extends in a width direction of the cathode pole piece 110 and may cut off the cathode pole piece 110. It can be seen that there is no positive electrode active substance in the area where the broken portion 103 is located.

Further, the broken portion 103 of the cathode pole piece 110 is located in the bent area 102 of the manufactured cell 100. Since there is no positive electrode active substance in the area where the broken portion 103 is located, the number of lithium ions that may be de-intercalated from the cathode pole piece 110 located in the bent area 102 will be significantly reduced. It can be seen that even if the adjacent anode pole pieces 120 experience "powdering off' in the process of bending, since the number of the lithium ions that may be de-intercalated from the cathode pole piece 110 is also reduced, it is still possible to prevent the number of lithium intercalation sites of the negative electrode active substance layer of the anode pole piece 120 from being far less than the number of lithium ions that can be provided by the positive electrode active substance layer of the cathode pole piece 110 adjacent thereto, thereby reducing or avoiding the occurrence of lithium precipitation phenomenon.

In the present embodiment, the pole piece processing apparatus 270 comprises a holding-transporting mechanism 271 and a cutting mechanism 272, which are both provided between the cathode-unwinding device 220 and the compounding device 240.

The holding-transporting mechanism 271 is capable of clamping and transporting the cathode pole piece 110, the cutting mechanism 272 is capable of cutting off the cathode pole piece 110 between the holding-transporting mechanism 271 and the compounding device 240, and the holding-transporting mechanism 271 is capable of pulling apart at a cut-off position to form the broken portion 103.

Specifically, the holding-transporting mechanism 271 may pull apart at the cut-off position by regulating the transporting speed. The continuous cathode pole piece material strip first passes through the holding-transporting mechanism 271 and the cutting mechanism 272 before entering the compounding device 240. After the cathode pole piece 110 is cut off by the cutting mechanism 272, the cathode pole piece 110 located downstream of the cut-off portion is compounded with the first diaphragm 131 in the compounding device 240, and the obtained first compound material strip 300 may be driven by the compounding device 240 to maintain a uniform transporting speed; at this time, the holding-transporting mechanism 271 decelerates or stops the transporting, so that the cut-off portion of the cathode pole piece 110 is pulled apart until the broken portion 103 is formed. Next, the holding-transporting mechanism 271 is regulated in speed to be synchronized with the compounding device 240, and assists the compounding device 240 in driving the first compound material strip 300 to be further transported downstream while feeding the cathode pole piece 110 located upstream of the cut-off portion into the compounding device 240.

Further, in the present embodiment, the holding-transporting mechanism 271 comprises clamping plates, which are capable of reciprocating movement along the transporting direction of the cathode pole piece 110. After the cathode pole piece 110 is cut off, the clamping plates may clamp the cathode pole piece 110 located upstream of the cut-off portion and move along with the cathode pole piece 110. In this way, it is possible to prevent the cut-off cathode pole piece 110 from sagging due to an excessively long overhang at the end, thereby ensuring that the cathode pole piece 110 may smoothly enter the compounding device 240.

It should be noted that in other embodiments, the cutting mechanism 272 may further punch the cathode pole piece 110 by the cooperation between a male die and a female die, and may remove a certain width of waste material from the cathode pole piece 110, thereby naturally forming the broken portion 103 while cutting the cathode pole piece 110 off. In this case, the holding-transporting mechanism 271 may maintain synchronous transporting with the compounding device 240, without the need to change the speed of the holding-transporting mechanism 271 to pull the cut-off portion of the cathode pole piece 110 apart to form the broken portion 103.

One or more broken portions 103 may be formed on the cathode pole piece 110. When a plurality of broken portions 103 are required, the holding-transporting mechanism 271 and the cutting mechanism 272 may simply repeat the above operations.

Specifically, in the present embodiment, the pole piece processing apparatus 270 further comprises a tape-bonding mechanism 273, which is capable of bonding a first tape 140 on a side of the cathode pole piece 110 so as to bond, to the first diaphragm 131, the cathode pole piece 110 at a side of the broken portion 103 proximate to the holding-transporting mechanism 271.

The broken portion 103 may divide the cathode pole piece 110 into two pole piece subsections, and the cathode pole piece 110 located at a side of the broken portion 103 proximate to the holding-transporting mechanism 271 refers to the upstream end of one of the pole piece subsections. The upstream end refers to the front end in the transporting direction of the first compound material strip 300, for example, if the first compound material strip 300 is transported from left to right, then the right end is the upstream end. Before the first compound material strip 300 enters the winding device 260, the first compound material strip 300 generally needs to wind around a guide roller to change direction. When winding around the guide roller, the upstream end of the pole piece subsection is prone to upwarping and detaching from the first diaphragm 131. Since the first tape 140 may bond the upstream end of the pole piece subsection to the first diaphragm 131, the cathode pole piece 110 will not detach from the first diaphragm 131 when the first compound material strip 300 winds around the guide roller.

As shown in FIG. 3, a portion of the first adhesive tape 140 passes through the broken portion 103 to be bonded to the first diaphragm 131, and another portion of the first adhesive tape 140 is bonded to the cathode pole piece 110. The first adhesive tape 140 may be bonded before or after the cathode pole piece 110 being compounded with the first diaphragm 131.

Further, in the present embodiment, the tape-bonding mechanism 273 is provided between the cutting mechanism 272 and the compounding device 240. That is, the tape-bonding mechanism 273 completes the tape-bonding before the cathode pole piece 110 being compounded with the first diaphragm 131. Therefore, during the three-in-one compound of the cathode pole piece 110, the anode pole piece 120, and the first diaphragm 131 by the compounding device 240, the first adhesive tape 140 may also prevent the cathode pole piece 110 and the first diaphragm 131 from being misaligned.

Further, in the present embodiment, the tape-bonding mechanism 273 is further capable of bonding a second tape (not shown in the figure) on a side of the cathode pole piece 110 so as to bond, to the first diaphragm 131, the cathode pole piece 110 at a side of the broken portion 103 distal to the holding-transporting mechanism 271.

As described above, the broken portion 103 may divide the cathode pole piece 110 into the two pole piece subsections, and the cathode pole piece 110 at a side of the broken portion 103 distal to the holding-transporting mechanism 221 refers to the downstream end of one of the pole piece subsections. The downstream end refers to the rear end in the transporting direction of the first compound material strip 300, for example, if the first compound material strip 300 is transported from left to right, then the left end is the downstream end. After the downstream end of the pole piece subsection is bonded to the first diaphragm 131 by the second tape, it is possible to prevent the cathode pole piece 110 from deviating with respect to the first diaphragm 131 during transporting, which is advantageous in improving the quality of the cell 100.

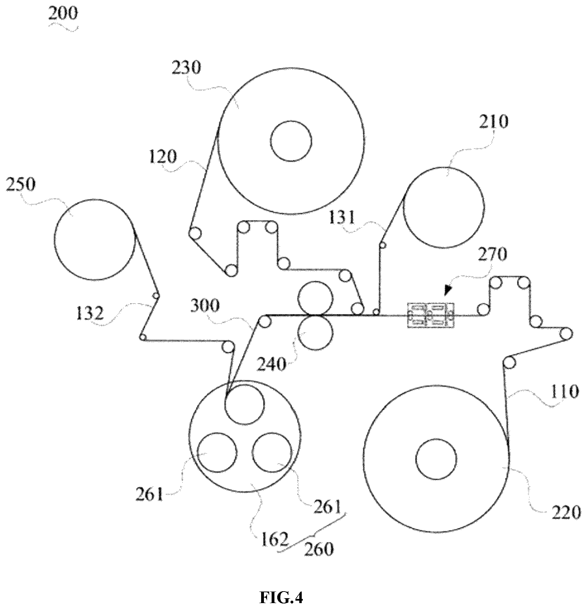

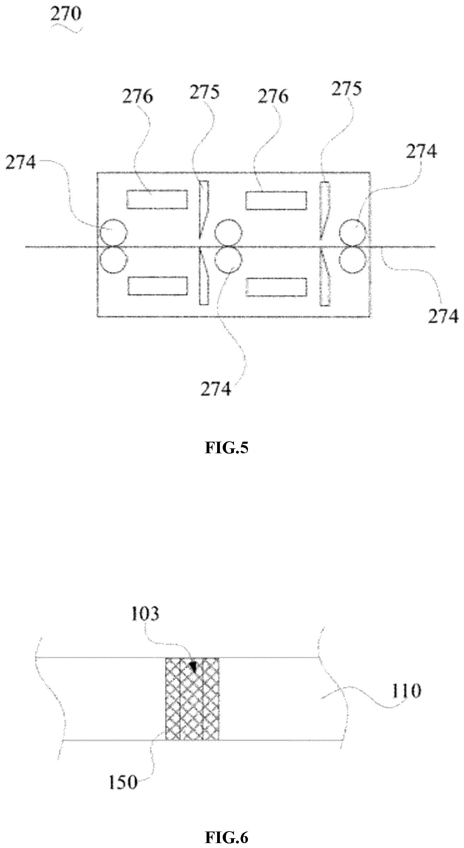

Obviously, in order to form the broken portion 103 on the cathode pole piece 110 of the first compound material strip 300, the pole piece processing apparatus 270 may also take other forms. For example, referring to FIGS. 4 and 5, in another embodiment, the pole piece processing apparatus 270 comprises a holding-transporting mechanism 274, a cutting mechanism 275 and a tape-bonding mechanism 276.

There are at least two holding-transporting mechanisms 274, and each holding-transporting mechanism 274 is capable of holding and transporting the cathode pole piece 110. The cutting mechanism 275 is provided between two adjacent holding-transporting mechanisms 274, and each cutting mechanism 275 may cut off the cathode pole piece 110, so as to obtain at least two pole piece subsections. At least two pole piece subsections may be held by different holding-transporting mechanisms 274 and transported in the transporting direction. Furthermore, the at least two holding-transporting mechanisms 274 are capable of driving the pole piece subsection being held to be transported different distances in the transporting direction, such that the broken portion 103 is formed between the adjacent two pole piece subsections. Specifically, the different holding-transporting mechanisms 274 may form a speed difference therebetween, so that the pole piece subsections held by the different holding-transporting mechanisms 274 are pulled apart to form the broken portions 103.

It should be noted that in other embodiments, the cutting mechanism 275 may also punch the cathode pole piece 110 by the cooperation between a male die and a female die, and may cut off a certain width of waste material from the cathode pole piece 110, thereby naturally forming the broken portion 103 while cutting the cathode pole piece 110 off. In this way, each holding-transporting mechanism 274 may maintain a uniform velocity without the need to pull the pole piece subsections apart by the holding-transporting mechanism 274.

Specifically, in the present embodiment, each holding-transporting mechanism 274 comprises a clamping roller, and the rotational speed of the clamping roller of each holding-transporting mechanism 274 may be adjusted individually. By adjusting the rotational speed of the clamping roller, it is possible to adjust the transporting speed of each holding-transporting mechanism 274. In this way, it is possible to create a velocity difference between the different holding-transporting mechanisms 274, so as to pull apart the respective pole piece subsections they are clamping to form the broken portion 103. The clamping roller may be adjusted more easily, takes up less space, and contributes to the compactness of the holding-transporting mechanism 274.

Specifically, in the present embodiment, there are provided three holding-transporting mechanisms 274 and two cutting mechanisms 275, with a cutting mechanism 275 provided between each pair of adjacent holding-transporting mechanisms 274. After the cathode pole piece 110 is processed by the pole piece processing apparatus 200, it is possible to form two broken portions 103 and obtain three pole piece subsections, each of the pole piece subsections is held by the holding-transporting mechanism 274.

Please also refer to FIG. 6, the tape-bonding mechanism 276 may bond the connector 150 to at least one side of the cathode pole piece 110 to cover the broken portion 103, so as to integrally connect at least two pole piece subsections. The tape-bonding mechanism 276 is also provided between two adjacent holding-transporting mechanisms 274. The tape-bonding mechanism 276 is provided in pairs with the cutting mechanism 275. More specifically, the tape-bonding mechanism 276 is located downstream of the cutting mechanism 275 with which it is paired.

In the present embodiment, the connector 150 may be a tape, and the tape-bonding mechanism 276 bonds tapes on both sides of the cathode pole piece 110 to enhance reliability.

The working process of the pole piece processing apparatus 270 is described below with reference to the drawings.

For ease of description in the following, the three holding-transporting mechanisms 274 from the upstream end to downstream end (from right to left in Figure 5) of the transporting direction of the cathode pole piece 110, are respectively referred to as the first, second, and third holding-transporting mechanisms 274; the two cutting mechanisms 275 are respectively referred to as the first cutting mechanism 275 and the second cutting mechanism 275; the two tape-bonding mechanisms 276 are respectively referred to as the first tape-bonding mechanisms 276 and the second tape-bonding mechanism 276; the obtained three pole piece subsections are respectively referred to as the first pole piece subsection, the second pole piece subsection, and the third pole piece subsection.

After the cathode pole piece 110 enters the pole piece processing apparatus 270, the first cutting mechanism 275 in the pole piece transporting direction cuts off the cathode pole piece 110 between the first and second holding-transporting mechanisms 274, and the second cutting mechanism 275 cuts off the cathode pole piece 110 between the second and third holding-transporting mechanisms 274, resulting in three pole piece subsections; the first, second, and third holding-transporting mechanisms 274 hold the pole piece subsections and transport them downstream respectively. Wherein, the transporting speed of the first holding-transporting mechanism 274 is less than that of the second holding-transporting mechanism 274, and the transporting speed of the second holding-transporting mechanism 274 is less than that of the third holding-transporting mechanism 274. Consequently, the first pole piece subsection moves a shorter distance downstream than the second pole piece subsection, and the second holding-transporting mechanism moves a shorter distance than the third holding-transporting mechanism. In this way, the three pole piece subsections are pulled apart so as to form two broken portions 103.

Further, after the broken portions 103 is formed, the two tape-bonding mechanisms 276 are provided with connectors 150 on both sides of the two broken portions 103 respectively, such as by applying adhesive tapes. Specifically, the first tape-bonding mechanism 276 applies a tape to bond the first pole piece subsection to the second pole piece subsection, and the second tape-bonding mechanism 276 applies a tape to bond the second pole piece subsection to the third pole piece subsection, thus integrally connecting the three pole piece subsections.

In this way, after forming the broken portion 103 on the cathode pole piece 110, connecting the both sides of the broken portion 103 by means of the connector 150 ensures the continuity of the cathode pole piece 110, allowing the cathode pole piece 110 to smoothly enter the compounding device 240 and be compounded with the first diaphragm 131 and anode pole piece 120.

Regarding the above cell forming apparatus 200, before the anode pole piece 120 and cathode pole piece 110 enter the winding device 260, firstly the compounding device 240 compounds the anode pole piece 120 and the cathode pole piece 110 with the first diaphragm 131 in a three-in-one compound to obtain the first compound material strip 300. Since the anode pole piece 120 and the cathode pole piece 110 are respectively located on two sides of the first diaphragm 131, the first diaphragm 131 will be enveloped between the anode pole piece 120 and the cathode pole piece 110. During the compounding process, the surfaces on both sides of the first diaphragm 131 will not come into direct contact with the compounding device 240. Therefore, it is possible to prevent the adhesive on the surface of the first diaphragm 131 from adhering to the compounding device 240, thereby improving the compounding effect of the first diaphragm 131 with the anode pole piece 120 and the cathode pole piece 110, and thus enhancing the quality of the manufactured cell.

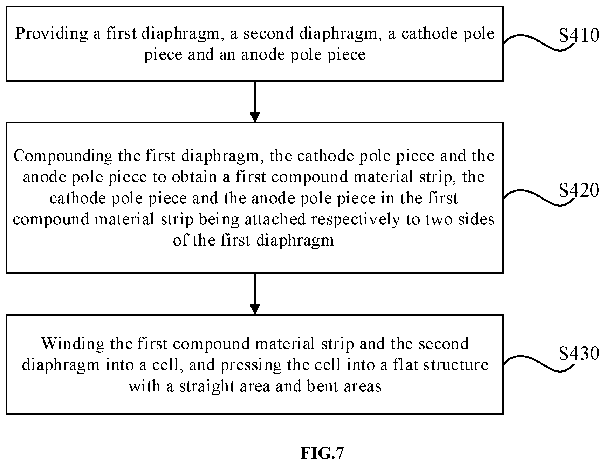

Please also refer to FIG. 7, the present disclosure further provides a cell forming process, which may be performed by the cell forming apparatus 200. The cell forming process comprises steps S410 to S430:
Step S410: providing a first diaphragm 131, a second diaphragm 132, a cathode pole piece 110 and an anode pole piece 120. Specifically, the first diaphragm 131, the second diaphragm 132, the cathode pole piece 110, and the anode pole piece 120 may be continuously unwound in the form of an unwinding shaft.
Step S420: compounding the first diaphragm 131, adjacent cathode pole piece 110 and anode pole piece 120 to obtain a first compound material strip 300, adjacent cathode pole piece 110 and anode pole piece 120 in the first compound material strip 300 being attached respectively to two sides of the first diaphragm 131.

During the compounding process, the cathode pole piece 110 and the anode pole piece 120 are respectively located on two sides of the first diaphragm 131 respectively, and are capable of enveloping the first diaphragm 131. As a result, the surfaces on both sides of the first diaphragm 131 will not come into direct contact with the compounding device, thereby preventing the adhesive on the surfaces of the first diaphragm 131 from adhering to the compounding device, and thus improving the compounding effect between the first diaphragm 131, the anode pole piece 120, and the cathode pole piece 110.

Step S430: winding the first compound material strip 300 and the second diaphragm 132 into a cell, and pressing the cell into a flat structure with a straight area and a bent area.

The specific structure of the cell 100 and the definitions of the straight area 101 and the bent area 102 have been described in detail in the foregoing, and thus are not further elaborated herein.

Since the compounding effect of the first diaphragm 131 with the anode pole piece 120 and the cathode pole piece 110 is significantly improved, the quality of the manufactured cell 100 may also be improved. It should be noted that since the manufacturing process of the cell 100 is continuous, the steps S410 to S430 may be performed simultaneously.

In the present embodiment, the cell forming process further comprises a step of: processing the cathode pole piece 110 to form a broken portion 103 on the cathode pole piece 110 of the first compound material strip 300, the broken portion 103 being located in the bent area.

As described above, since there is no positive electrode active substance in the area where the broken portion 103 is located, the number of lithium ions that may be de-intercalated from the cathode pole piece 110 located in the bent area 102 will be significantly reduced, thereby reducing or avoiding the occurrence of lithium precipitation phenomenon.

The technical features of the above embodiments may be combined arbitrarily. For the sake of brevity, not all possible combinations of the individual technical features of the above embodiments are described. However, a combination of these technical features shall be considered to be within the scope of the present specification, as long as there is no contradiction in the combination.

The above embodiments are merely expressions of a few implementations of the present disclosure described in a specific and detailed manner, and are not to be construed as limitation to the scope of the present disclosure. It is to be noted that for a person of ordinary skill in the art, various modifications and improvements could be made without departing from the principle of the present disclosure, and shall fall into the protection scope of the present disclosure. Therefore, the protection scope of the present disclosure shall be subject to the appended claims.

## Claims

1. A cell forming apparatus, **characterized by** comprising a first diaphragm-unwinding device, a cathode-unwinding device, an anode-unwinding device, a compounding device, a second diaphragm-unwinding device and a winding device; the first diaphragm-unwinding device is configured for unwinding a first diaphragm, and the cathode-unwinding device and the anode-unwinding device are capable of unwinding a cathode pole piece and an anode pole piece respectively on two sides of the first diaphragm; the compounding device is capable of receiving the first diaphragm, the cathode pole piece and the anode pole piece and compounding them to obtain a first compound material strip; the second diaphragm-unwinding device is configured for unwinding a second diaphragm; the winding device comprises a winding needle structure capable of winding the first compound material strip and the second diaphragm into a cell.

2. The cell forming apparatus according to claim 1, wherein the compounding device comprises an upper pressure roller and a lower pressure roller, and wherein the cathode pole piece, the anode pole piece, and the first diaphragm are capable of passing between the upper pressure roller and the lower pressure roller.

3. The cell forming apparatus according to claim 2, wherein both the upper pressure roller and the lower pressure roller are heat pressure rollers.

4. The cell forming apparatus according to claim 1, wherein the cell is capable of being pressed into a flat structure with a straight area and a bent area, the cell forming apparatus further comprises a pole piece processing apparatus, which is capable of processing the cathode pole piece to form a broken portion on the cathode pole piece of the first compound material strip, and the broken portion is located in the bent area of the manufactured cell.

5. The cell forming apparatus according to claim 4, wherein the pole piece processing apparatus comprises a holding-transporting mechanism and a cutting mechanism, which are both provided between the cathode-unwinding device and the compounding device, the holding-transporting mechanism is capable of clamping and transporting the cathode pole piece, the cutting mechanism is capable of cutting off the cathode pole piece between the holding-transporting mechanism and the compounding device, and the holding-transporting mechanism is capable of pulling apart at a cut-off position to form the broken portion.

6. The cell forming apparatus according to claim 5, wherein the pole piece processing apparatus further comprises a tape-bonding mechanism, which is capable of bonding a first tape on a side of the cathode pole piece so as to bond, to the first diaphragm, the cathode pole piece at a side of the broken portion proximate to the holding-transporting mechanism.

7. The cell forming apparatus according to claim 6, wherein the tape-bonding mechanism is further capable of bonding a second tape on a side of the cathode pole piece so as to bond, to the first diaphragm, the cathode pole piece at a side of the broken portion distal to the holding-transporting mechanism.

8. The cell forming apparatus according to claim 6 or 7, wherein the tape-bonding mechanism is provided between the cutting mechanism and the compounding device.

9. The cell forming apparatus according to claim 4, wherein the pole piece processing apparatus comprises:
at least two holding-transporting mechanisms, each of which is capable of holding and transporting the cathode pole piece;
a cutting mechanism provided between two adjacent holding-transporting mechanisms, each cutting mechanism being capable of cutting off the cathode pole piece so as to obtain at least two pole piece subsections, and the at least two holding-transporting mechanisms being capable of holding the at least two pole piece subsections respectively and pulling the two adjacent pole piece subsections apart to form the broken portion;
a tape-bonding mechanism, which is capable of bonding a connector on at least one side of the cathode pole piece, to cover the broken portion so as to integrally connect the at least two pole piece subsections.

10. The cell forming apparatus according to claim 1, wherein the winding device further comprises a turret where a plurality of winding needle structures are provided, and the turret rotates to drive the plurality of winding needle structures to sequentially transfer to a position capable of obtaining the first compound material strip and the second diaphragm.

11. A cell forming process, **characterized by** comprising steps of:
providing a first diaphragm, a second diaphragm, a cathode pole piece and an anode pole piece;
compounding the first diaphragm, the cathode pole piece and the anode pole piece to obtain a first compound material strip, the cathode pole piece and the anode pole piece in the first compound material strip being attached respectively to two sides of the first diaphragm; and
winding the first compound material strip and the second diaphragm into a cell, and pressing the cell into a flat structure with a straight area and a bent area.

12. The cell forming process according to claim 11, **characterized by** further comprising a step of: processing the cathode pole piece to form a broken portion on the cathode pole piece of the first compound material strip, the broken portion being located in the bent area.

13. A cell, wherein the cell is manufactured by the cell forming apparatus according to any one of claims 1 to 10; or, the cell is manufactured by the cell forming process according to claim 11 or 12, the cell comprises a cathode pole piece, an anode pole piece, and a diaphragm located between a cathode pole piece and an anode pole piece adjacent thereto, wherein the cathode pole piece, the anode pole piece and the diaphragm are wound and pressed to form a flat structure, and the cell has a straight area and bent areas located at both ends of the straight area.

14. The cell according to claim 13, wherein the cathode pole piece, at least partially located in the bent area, forms a broken portion extending in a width direction.

15. The cell according to claim 14, wherein the broken portion divides the cathode pole piece where the broken portion is located into at least two pole piece subsections, and the at least two pole piece subsections are integrally connected through a connector.
